# FASCICULE DE BREVET EUROPEEN

(11) **EP 0 474 547 B1**
(45) Date de publication et mention de la délivrance du brevet: **22.12.1993**
(21) Numéro de dépôt: 91402346.0
(22) Date de dépôt: 02.09.1991
(51) Int. Cl.: B60M 1/12, B60M 1/20

(54) **Dispositif d'alimentation électrique aérienne de véhicules ferroviaires, comportant un conducteur rigide escamotable, et ligne d'alimentation ou ensemble de lignes utilisant au moins un tel dispositif**
Oberirdische elektrische Versorgungsvorrichtung für Eisenbahnfahrzeuge mit einer steifen ausklappbaren Leiter und Fahrleitung oder Fahrleitungskomplex mit mindestens einer solchen Vorrichtung
Overhead electrical power supply device for railway vehicles, comprising a retractable rigid conductor, and supply line or line assembly using at least such a device

(30) Priorité: 04.09.1990 FR 9010980
(43) Date de publication de la demande: 11.03.1992
(73) Titulaire: SOCIETE NATIONALE DES CHEMINS DE FER FRANCAIS, F-75436 Paris Cedéx 09 (FR); SYSTEMES PRODUCTIQUES ET INGENIERIE INDUSTRIELLE, 59147 Gondecourt (FR); PERISZCZ ELECTRICITE, F-59155 Faches Thumesnil (FR)
(72) Inventeur: Mennessier, Alain, F-93420 Villepinte (FR); Poligne, Christian, F-93140 Bondy (FR)
(74) Mandataire: Casalonga, Axel

(56) Documents cités:
- EP-A- 0 174 925
- DE-A- 1 803 762

## Description

La présente invention concerne un dispositif permettant l'alimentation électrique aérienne de véhicules circulant sur rails.

Elle concerne également une ligne ou un ensemble de lignes, comportant au moins un tel dispositif.

Les lignes d'alimentation électrique aériennes classiques, à caténaires, sont constituées d'au moins un fil électrique suspendu. Ces caténaires s'avèrent très encombrantes quand il s'agit notamment de décharger des wagons, car il est impossible d'amener un engin de levage au-dessus de la voie. Il est donc nécessaire de déplacer les wagons à décharger sur des voies sans caténaires, à l'aide de machines à moteurs thermiques.

La présente invention a pour but d'éliminer cet inconvénient, en assurant une libération totale de la partie située au-dessus de la voie, voire même une libération latérale totale des deux côtés de la voie.

La présente invention a pour objet un dispositif permettant l'alimentation éléctrique aérienne de véhicules circulant sur rails, comportant un conducteur escamotable parallèlement aux rails.

Selon l'invention, le conducteur est rigide et monté à l'extrémité d'au moins deux bras parallèles pivotant simultanément dans un plan horizontal.

Chaque bras pourrait être monté le long d'un poteau pour pouvoir ainsi tourner de 180°, mais selon un mode préféré de réalisation, chaque bras est monté à la partie basse du poteau, l'axe de rotation du bras étant confondu avec celui du poteau, ce qui autorise une rotation de 360°.

Chaque bras comporte une couronne dentée dont l'axe est confondu avec l'axe de rotation du bras, le poteau portant un motoréducteur engrènant sur la couronne dentée.

Chaque bras comporte à son extrémité un isolateur portant un étrier, le conducteur rigide étant fixé sur un support relié à chaque étrier.

La présente invention a également pour objet une ligne d'alimentation électrique aérienne.

Selon l'invention, elle comporte au moins un dispositif assurant, en position de travail, la continuité électrique entre deux tronçons à caténaires et libérant, en position escamotée, la partie située au-dessus de la voie, entre les deux tronçons à caténaires.

Selon l'invention, la ligne d'alimentation peut aussi comporter deux dispositifs assurant en position de travail, la continuité électrique entre deux tronçons à caténaires et libérant, en position escamotée, la partie située au-dessus de la voie entre les deux tronçons à caténaires et une partie latérale de la voie.

La présente invention concerne également un ensemble de deux ou trois lignes, pour l'alimentation électrique de respectivement deux ou trois voies.

Selon l'invention, cet ensemble comporte un dispositif assurant la continuité électrique entre deux tronçons à caténaires alternativement d'une ligne à l'autre.

Il est décrit ci-après, à titre d'exemple et en référence aux dessins annexés, un dispositif selon l'invention, ainsi qu'une ligne ou un ensemble de lignes comportant au moins un tel dispositif.
La figure 1 représente une ligne électrique comportant un dispositif d'alimentation selon l'invention, muni de cinq bras parallèles;
la figure 2 représente une ligne électrique comportant deux dispositifs d'alimentation selon l'invention, munis chacun de deux bras parallèles;
la figure 3 montre un ensemble de trois voies alimentées alternativement par un dispositif selon l'invention, muni de quatre bras parallèles;
la figure 4 montre un mode préféré de réalisation du dispositif selon l'invention;
la figure 5 montre un détail selon V de la figure 4, le bras ayant tourné de 90°;
la figure 6 montre le conducteur rigide et son support, en coupe, au niveau d'un étrier à libre dilatation;
la figure 7 montre le conducteur rigide et son support, en coupe, au niveau d'un étrier à point d'anticheminement.

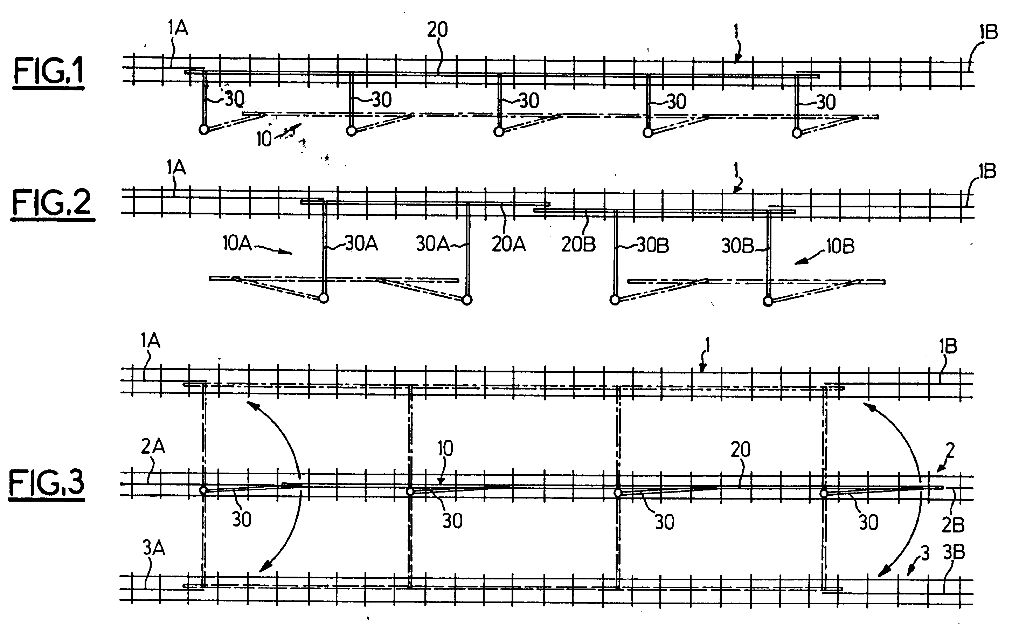

La figure 1 montre une voie ferrée 1 munie d'un dispositif d'alimentation 10, selon l'invention, assurant la continuité électrique entre deux tronçons 1A, 1B, à alimentation par caténaires. Le dispositif 10 comporte un conducteur rigide 20 monté à l'extrémité de cinq bras tournants 30. La position de travail est représentée en trait continus, tandis que la position escamotée est représentée en traits mixtes.

La figure 2 montre une voie ferrée identique à celle de la figure 1, au-dessus de laquelle sont installés deux dispositifs 10A, 10B, selon l'invention. Le dispositif 10A comporte un conducteur 20A monté à l'extrémité de deux bras tournants 30A. Le dispositif 10B comporte un conducteur rigide 20B installé à l'extrémité de deux bras tournants 30B. Une telle ligne d'alimentation électrique permet de libérer la voie verticalement, mais aussi latéralement, comme le montre la position escamotée. En effet, entre les deux bras centraux de chaque dispositif, la voie est totalement libérée latéralement.

La figure 3 montre trois voies ferrées 1, 2, 3, comportant chacune deux tronçons, respectivement 1A, 1B; 2A, 2B; 3A, 3B; à alimentation électrique par caténaires. Ces trois voies sont alternativement alimentées par un dispositif d'alimentation 10. Ce dispositif d'alimentation 10 comporte un conducteur rigide 20 installé à l'extrémité de quatre bras tournants 30. Le dispositif, dans sa position représentée en traits forts, alimente la voie centrale 2, tandis que le dispositif, dans ses deux positions représentées en traits interrompus, alimente soit la voie 1, soit la voie 3.

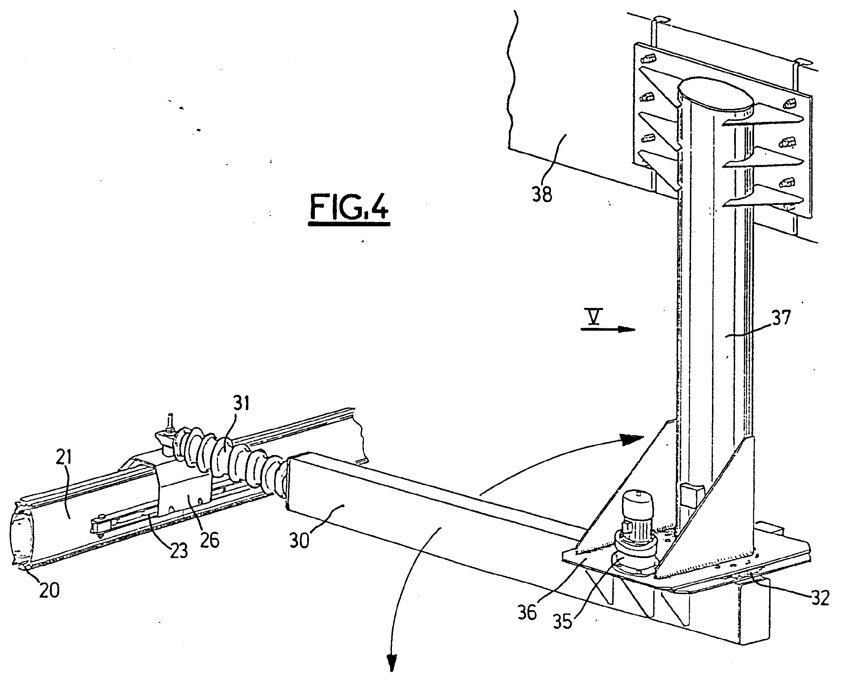

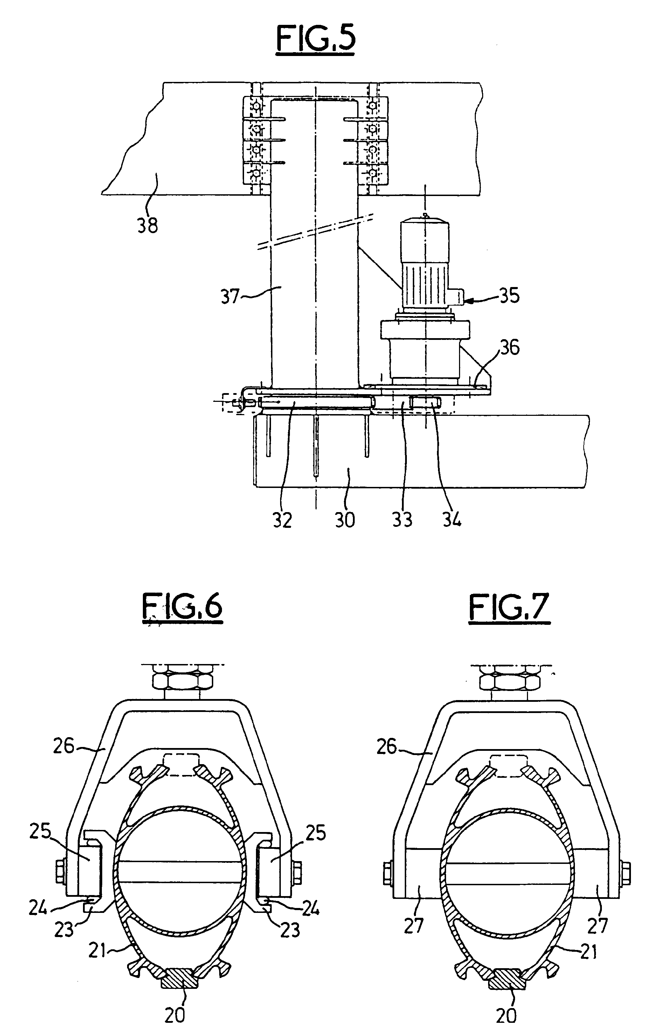

La figure 4 montre un tronçon de conducteur 20 installé sur un support 21. Ce support 21 comporte des glissières 23 sur lesquelles roule un étrier 26. Cet étrier 26 est porté par un isolateur 31 installé à l'extrémité d'un bras 30. Ce bras 30 est installé à l'extrémité inférieure d'un poteau 37 porté par une traverse 38. La rotation du bras est assurée par un motoréducteur 35 installé sur une plaque 36 solidaire du poteau 37, ce motoréducteur entraînant par l'intermédiaire de pignons une couronne dentée 32 solidaire du bras 30, comme cela est visible en figure 5.

En effet, cette figure 5 montre le motoréducteur 35 installé sur la plaque 36, un pignon 34 monté sur l'arbre du motoréducteur 35 et un pignon intermédiaire 33 engrènant directement sur la couronne dentée 32.

Enfin, les figures 6 et 7 montrent le montage du support 21 du conducteur 20 sur un étrier 26. L'un des bras du dispositif selon l'invention comporte un étrier 26 sur lequel le support 21 est monté simplement à l'aide d'entretoises 27, comme cela est représenté en figure 7. Ceci constitue un point d'anticheminement.

Le ou les autres étriers sont montés avec un dispositif permettant la libre dilatation du conducteur, comme cela est représenté sur la figure 6. Cette figure 6 montre donc un étrier 26 comportant une bague 25 et des rouleaux 24, tandis que le support 21 comporte deux glissières 23 dont l'une est bien visible en figure 4. Ces deux glissières roulent sur les rouleaux 24, ce qui compense les écarts d'allongement du conducteur dus aux écarts de température. Le support 21 est symétrique et il porte à sa partie basse le conducteur 20, tandis qu'en partie haute, il est possible d'installer des lignes électriques diverses, telles que par exemple des lignes de transmission. Le support 21 et le conducteur 20 sont de préférence tous deux réalisés en profilé aluminium.

Le pivotement simultané de tous les bras est assuré par un asservissement de tous les motoréducteurs.

## Revendications

1. Dispositif (10) permettant l'alimentation électrique aérienne de véhicules circulant sur rails, comportant un conducteur (20,20A,20B) escamotable parallèlement aux rails, caractérisé en ce que le conducteur est rigide et monté à l'extrémité d'au moins deux bras (30) parallèles, pivotant simultanément dans un plan horizontal.

2. Dispositif selon la revendication 1, caractérisé en ce que chaque bras (30) est monté à la partie basse d'un poteau (37), l'axe de rotation du bras étant confondu avec celui du poteau.

3. Dispositif selon la revendication 2, caractérisé en ce que chaque bras comporte une couronne dentée (32) dont l'axe est confondu avec l'axe de rotation du bras, le poteau portant un motoréducteur (35) entraînant la couronne dentée.

4. Dispositif selon la revendication 3, caractérisé en ce que chaque bras comporte, à son extrémité, un isolateur (31) portant un étrier (26), le conducteur (20) étant fixé sur un support (21) relié à chaque étrier.

5. Ligne d'alimentation électrique aérienne, caractérisée en ce qu'elle comporte au moins un dispositif selon l'une des revendications 1 à 4, assurant, en position de travail, la continuité électrique entre deux tronçons à caténaires et libérant, en position escamotée, la partie située au-dessus de la voie, entre les deux tronçons à caténaires.

6. Ligne d'alimentation électrique aérienne, caractérisée en ce qu'elle comporte au moins deux dispositifs selon l'une des revendications 1 à 4, assurant en position de travail la continuité électrique entre deux tronçons à caténaires et libérant, en position escamotée, la partie située au-dessus de la voie, entre les deux tronçons à caténaires, et une partie latérale de la voie.

7. Ensemble de deux ou trois lignes pour l'alimentation électrique de respectivement deux ou trois voies, caractérisé en ce qu'il comporte un dispositif selon l'une des revendications 1 à 4, assurant la continuité électrique entre deux tronçons à caténaires alternativement d'une ligne à l'autre.

## Patentansprüche

1. Vorrichtung (10), die die oberirdische Stromversorgung von auf Schienen fahrenden Fahrzeugen gestattet, umfassend eine parallel zu den Schienen einziehbare Leitung (20, 20A, 20B), dadurch **gekennzeichnet,** daß die Leitung starr und am Ende von wenigstens zwei parallelen Armen (30) angebracht ist, die sich gleichzeitig in einer horizontalen Ebene drehen.

2. Vorrichtung nach Anspruch 1, dadurch **gekennzeichnet,** daß jeder Arm (30) am unteren Teil eines Mastes (37) angebracht ist, wobei die Drehachse des Arms mit derjenigen des Mastes vereinigt ist.

3. Vorrichtung nach Anspruch 2, dadurch **gekennzeichnet,** daß jeder Arm einen Zahnkranz (32) umfaßt, dessen Achse mit der Drechachse des Arms vereinigt ist, wobei der Mast einen den Zahnkranz mitnehmenden Getriebemotor (35) trägt.

4. Vorrichtung nach Anspruch 3, dadurch **gekennzeichnet,** daß jeder Arm an seinem Ende einen einen Bügel (26) tragenden Isolator (31) umfaßt, wobei die Leitung (20) auf einem mit jedem Bügel verbundenen Träger (21) befestigt ist.

5. Oberirdische Stromversorgungsleitung, dadurch **gekennzeichnet,** daß sie wenigstens eine Vorrichtung nach einem der Ansprüche 1 bis 4 umfaßt, die in der Arbeitsposition die elektrische Kontinuität zwischen zwei Kettenendstücken sicherstellt und in der eingezogenen Position den oberhalb der Schiene liegenden Teil zwischen den beiden Kettenendstücken freigibt.

6. Oberirdische Stromversorgungsleitung, dadurch **gekennzeichnet,** daß sie wenigstens zwei Vorrichtungen nach einem der Ansprüche 1 bis 4 umfaßt, die in der Arbeitsposition die elektrische Kontinuität zwischen zwei Kettenendstücken sicherstellt und in der eingezogenen Position den oberhalb der Schiene befindlichen Teil zwischen den beiden Kettenendstücken und einem seitlichen Teil der Schiene freigibt.

7. Satz von zwei oder drei Leitungen für die elektrische Versorgung jeweils von zwei oder drei Gleisen, dadurch **gekennzeichnet,** daß er eine Vorrichtung nach einem der Ansprüche 1 bis 4 umfaßt, die die elektrische Kontinuität zwischen zwei Kettenendstücken abwechselnd von einer Leitung zur anderen sicherstellt.

## Claims

1. Device (10) allowing the overhead electrical feeding of vehicles running on rails, including a conductor (20, 20A, 20B) which is retractable parallel to the rails, characterized in that the conductor is rigid and mounted at the end of at least two parallel arms (30) pivoting simultaneously in a horizontal plane.

2. Device according to Claim 1, characterized in that each arm (30) is mounted at the bottom portion of a post (37), the axis of rotation of the arm being coincident with that of the post.

3. Device according to Claim 2, characterized in that each arm includes a crown gear (32) whose axis is coincident with the axis of rotation of the arm, the post carrying a geared motor (35) driving the crown gear.

4. Device according to Claim 3, characterized in that each arm includes, at its end, an insulator (31) carrying a U-clamp (26), the conductor (20) being fixed to a support (21) connected to each U-clamp.

5. Overhead electrical feed line, characterized in that it includes at least one device according to one of Claims 1 to 4, ensuring, in the working position, electrical continuity between two catenary sections and releasing, in the retracted position, the portion located above the track, between the two catenary sections.

6. Overhead electrical feed line, characterized in that it includes at least two devices according to one of Claims 1 to 4, ensuring, in the working position, electrical continuity between two catenary sections and releasing, in the retracted position, the portion located above the track, between the two catenary sections, and a lateral portion of the track.

7. Assembly of two or three lines for the electrical feeding of two or three tracks respectively, characterized in that it includes a device according to one of Claims 1 to 4, ensuring electrical continuity between two catenary sections alternately from one line to another.
